(19) Europäisches Patentamt
European Patent Office
Office européen des brevets

(11) **EP 4 134 227 B1**

(12) **EUROPEAN PATENT SPECIFICATION**

(45) Date of publication and mention
of the grant of the patent:
**31.01.2024 Bulletin 2024/05**

(21) Application number: **21191129.2**

(22) Date of filing: **12.08.2021**

(51) International Patent Classification (IPC):
**B29D 30/00** (2006.01)   **B60C 25/14** (2006.01)
**B29C 37/02** (2006.01)   **G01M 17/02** (2006.01)

(52) Cooperative Patent Classification (CPC):
**B29D 30/0016;** B29C 37/02; B29D 2030/0027;
B60C 25/0521

(54) **DEVICE FOR SPREADING A TIRE AS WELL AS SYSTEM AND METHOD FOR PROCESSING A TIRE**

VORRICHTUNG ZUM SPREIZEN EINES REIFENS SOWIE SYSTEM UND VERFAHREN ZUR VERARBEITUNG EINES REIFENS

DISPOSITIF D'ÉCARTEMENT DE PNEU, AINSI QUE SYSTÈME ET PROCÉDÉ DE TRAITEMENT DE PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.02.2023 Bulletin 2023/07**

(73) Proprietor: **JoVision UG (haftungsbeschränkt)**
**22083 Hamburg (DE)**

(72) Inventors:
• **Al-Shdaifat, Islam**
**22083 Hamburg (DE)**
• **Al-Shyoukh, Moath**
**22083 Hamburg (DE)**
• **Al Shdaifat, Mustafa**
**22083 Hamburg (DE)**
• **Hayajneh, Abdullah**
**22083 Hamburg (DE)**
• **Al-Anati, Almutasem Bellah**
**22083 Hamburg (DE)**

(74) Representative: **RGTH**
**Patentanwälte PartGmbB**
**Neuer Wall 10**
**20354 Hamburg (DE)**

(56) References cited:
EP-A2- 0 294 343       EP-A2- 0 915 328
CN-A- 110 816 178      DE-A1- 1 816 715
DE-A1-102015 207 740   DE-U1- 29 905 445
KR-A- 20000 020 157    KR-B1- 100 513 133
US-A- 1 886 834        US-A- 4 793 463
US-A- 4 890 717        US-A1- 2004 016 293
US-A1- 2018 370 304

**Description**

The present invention relates to a device for spreading a tire. Furthermore, the present invention relates to a system and a method for processing a tire.

**Prior art**

Devices for spreading and inspecting a tire are known from prior art. However, improved devices and methods for receiving, transporting, flipping, spreading as well as inspecting the tire all combined in a compact and simple process is a long-felt need. Prior art document US 5013010 A discloses an apparatus for spreading apart vehicle tires in the bead region, in particular for visual inspection of the inner and outer wall of the tires and for removing heat flashes, in which in a machine frame a receiving means is provided which receives a tire rotatably mounted and comprises at least one spreading element which grips the bead and pulls the latter outwardly. A drive means turns the tire in the receiving means, wherein at least three parallel rollers are rotatably mounted.

In the documents US 3583674 A and US 4293120 A describe only in general means for spreading the tire beads. How the tire is transported and positioned to the inspection position is not disclosed.

Prior art documents US 4890717 A discloses a turnover apparatus for the controlled turning of a flat-sided article, such as a vehicle wheel-tire unit, from a horizontal outside-up position to a horizontal outside-down position includes a chain conveyor for conveying the article in a horizontal position. A turnover device employs two pairs of elongate arms mounted for rotation about respective, spaced, parallel axes from and to a normal rest position wherein the pairs of arms project horizontally in opposite directions from their axes below and parallel to the conveying chains.

US 4793463 A relates also to a turnover device for turning over articles as they are conveyed along a production path. The turnover device comprises a frame, two spaced apart and parallel axis, first and second carrier arms mounted respectively on the axes for rotational movement, first and second meshing gears mounted on the axes respectively, and a drive motor and lever.

Document US 1886834 A discloses a tire spreading machine, means to rotatably support a tire and means to spread said tire, said last mentioned means including pivotally mounted levers, rods mounted within said levers and longitudinally adjustable with respect thereto, brackets hinged to the top end of said rods and axially rotatable, with respect thereto, and a cone shaped hook member angularly related with respect to and connected, with said brackets.

Another tire spreading device is disclosed in US 2018 370304 A.

Document CN 110816178 A discloses a tire opener. The tire opener is characterized in that a connecting seat B (7) is fixedly mounted on the upper face of a straight rod, and a supporting seat A, a supporting seat B and a clamping head A are fixedly mounted in the middle of the lower face of the straight rod and the two ends of the straight rod correspondingly.

**Summary of the invention: problem, solution, advantages**

It is the object of the present invention to provide a device for handling a tire in a simply and compact manner, meanwhile the device maintaining minimum contact points with the tire during inspection. Furthermore, it is an object of the present invention to provide a system and a method for processing a tire.

According to the present invention, devices for handling a tire are proposed. According to the present invention, handling a tire comprises the step of spreading the tire and preferably the steps of lifting, flipping.

Preferably, a device for lifting and flipping a tire is proposed, wherein the device comprises at least a first arm assembly for lifting and flipping the tire and a transport mechanism for delivering the tire towards the first arm assembly.

The transport mechanism comprises preferably an opening wherein the first arm assembly may be configured to be moved from beneath the transport mechanism upwards through the opening to lift and flip the tire.

Preferably, the at least first arm assembly comprises at least one arm with at least two arm sections, wherein the two arm sections form an angle with respect to each other.

During the lifting and flipping of the tire, the first arm assembly can for example be rotated around its suspension axis by 180°.

Furthermore, it is preferred that the at least first arm assembly comprises at least one arm with multiple sliding means arranged along a longitudinal direction of the arm, wherein the sliding means are configured to cause the tire to slide to a defined position of the arm along its longitudinal direction during lifting and flipping.

The defined position preferably is a vertex of the angle.

The two arm sections are preferably arranged with respect to each other to form a V-shaped arm during lifting and flipping of the tire.

Advantageously, the at least first arm assembly is configured to rotate the at least first arm around its longitudinal axis by 90 ° after lifting and flipping to form an Λ-shaped arm for supporting the tire during rotation of the tire.

It is preferred that the device is further configured to rotate the tire after lifting and flipping for inspecting the tire, wherein each of the two arm sections of the arm preferably comprises a rolling means to support the rotation of the tire during inspection.

Preferably, the sliding means and the rolling means are arranged on opposite sides of the at least first arm.

Furthermore, it is preferred that the transport mechanism comprises rollers arranged around the opening and configured to support sliding of the tire towards the opening for delivering the tire towards the first arm assembly.

The transport mechanism is preferably arranged and configured to tilt around its pivot based on gravity once the tire is arranged on the transport mechanism and above the opening. This is based on a difference in weight left versus right and using a pivot point (fulcrum) for rotation like the seesaw principle. When the arms assembly are in the start position, they will press the transport mechanism down to a balanced position (horizontal). Once the arms move up the transport mechanism starts to rotate around the pivot due to the weight difference. Using the preferred rollers or balls around the opening in the transport mechanism will let the tire slide smoothly when being lifted or dropped. When the arms are coming back to position, they will press the transport mechanism back to its original (home position).

According to claim 1 of the the- present invention, a device for spreading a tire is proposed, which comprises a first arm assembly and a second arm assembly.

Preferably, the first arm assembly comprises at least one upper arms and the second arm assembly comprises at least one lower arm. The terms "upper" and "lower" in particular refer to relative positions of the arms in a vertical direction when the arm assemblies hold and spread the tire. Further preferably, each arm assembly comprises more than one arms for a better and more stable grip of the tire.

The device is configured to move the first arm assembly or the second arm assembly along a first direction so as to spread the tire.

In order to spread the tire, the beads of the tire may need to be expanded towards the outside of the sidewall or the circumferential wall of the tire, so that the inside or the inner liner of the tire may be better exposed for inspection.

The first direction means preferably a vertical direction, further preferably a vertical and downwards direction with respect to the ground. By moving the first or the second arm assembly along the first direction, a vertical inspection of the tire may be achieved, i.e. the tire may be held in a vertical position where its circumference is perpendicular to the horizontal ground. One advantage of the vertical inspection is that, minimum movements of the arm assemblies are required.

In addition or alternatively, the device is further configured to move the first arm assembly along a second direction and the second arm assembly along a third direction so as to spread the tire, wherein the second direction and the third direction are opposite to each other.

The second or the third direction preferably refers to a horizontal direction, which is parallel with respect to the ground. By moving the first arm assembly along a second direction and the second arm assembly along a third direction, a horizontal inspection of the tire may be achieved, i.e. the tire may be held parallel to the horizontal ground during inspection. An advantage of the horizontal inspection is that the tire does not need to be flipped or rotated during the spreading process.

Especially, the first arm assembly and the second arm assembly comprise at least one arm respectively, and each arm comprises preferably two arm sections, wherein the at least two arm sections form an angle with respect to each other, wherein the at least two arm sections contact two tire beads, and the angle is located substantially between the tire beads, and wherein the angle determines substantially a width or a distance of the tire beads can be spread. Preferably the angle of the first arm assembly and the angle of the second arm assembly are the same.

Preferably the arm section is a subsection of the arm and has a substantially longer length than its width or than its thickness. Different arm sections may extend in different directions along their longitudinal axis.

It is advantageous that the length, the direction of extension and the shape of the individual arm section, as well as the geometry between the different arm sections mainly depend on the size of the processed tire, the desired spreading width between the tire beads and desired contact friction between the arms and the tire.

The size of the tire may be provided by user, or be measured by sensors, laser scanners or limit switches, or be retrieved by reading a barcode on the tire, where the information of the tire size is encoded. Alternatively, a database including this information can be consulted using the barcode.

It is advantageous that the geometry, in particular the angle formed between the two arm sections, i.e. the spreading angle, determines substantially the width or the distance of the tire beads can be spread by the arms. The width or the distance of the tire beads can be spread by the arms, which is also referred as "the spreading width" in the context here, means the horizontal distance difference between the two tire beads in the non-spread state and in the spread state. Moreover, the lengths of the different arm sections forming the spreading angle are preferably the same. Further preferably, the two arm sections are arranged symmetrically to each other along the spreading angle bisector.

More specifically, during the spreading process, the two arm sections first come into contact with the two tire beads, preferably at the middle parts of the arm sections, respectively, and the spreading angle is located substantially between the tire beads. Due to the opposite moving directions of the first arm assembly and the second arm and due to the geometry relation between the two arm sections and the tire beads, the tire beads will then be spread, i.e. the distance between the two beads will become wider.

The range of the angle between two arm sections is preferably 30° to 160°, more preferably 60° to 120°. Typically, the larger the angle is, the broader the tire beads may be spread. The angle can variable or set and fixed depending on the factory or tire type.

Advantageously, at a free end of an arm section, preferably the arm section of the lower arm, may be provided with an elongate portion as a tip or a head at the free end of the arm section. More preferably, the tip or head of the arm section is formed as an upwardly and vertically elongated portion. It ensures a better grip of the tire by the arms during handling and moving of the tire.

Furthermore, the first and the second arm assembly are preferably arranged symmetrically to each other along a horizontal or a vertical plane. The symmetrical arrangement of the first and the second arm assembly is preferably maintained during the entire tire inspection process, especially preferably during the tire spreading process.

It is also preferable that the first and/or the second arm assembly is constructed to driving rollers to roll the tire. In particular, the rollers may be directly arranged or integrated on parts of the arm assemblies which are in contact with the tire, so that the tire may be driven to be rolled once the arm assemblies grip the tire.

In particular the device may further comprise a flipper for helping the arm assemblies to flip or rotate the tire between a horizontal position and a vertical position. Moreover, a coupler for connecting the flipper to a base is preferably provided to achieve the flipping operation.

Preferably, the device is further configured to move the first arm assembly and the second arm assembly along a fourth direction so as to transport the tire to a preset position, before moving the first arm assembly or the second arm assembly along the first direction so as to spread the tire.

The preset position is preferably a floating position for inspecting and further handling of the tire, where all side walls of the tire are preferably not in contact with anything at the preset position. The side walls of the tire are understood under this context as two outer circumferential side walls of the tire, which are not in contact with the ground when the tire is in use.

Advantageously, the preset position may be determined by finding a minimum distance between the outermost circumference of the tire, i.e. the tire tread, and a line passing through the centers of two main rollers, when the arm assemblies hold the tire and the tire tread comes into contact with the rotation mechanism.

It is preferable that the fourth direction is the opposite direction of the first direction. That is, the fourth direction may be a vertical and upwards direction with respect to the ground. Preferably, before the arm assemblies spread the tire, the tire is first loaded by the arm assemblies, especially preferably by the second arm assembly, and transported vertically upwards to the preset position. That is, the preset position is preferably a position where the tire hanging vertically, i.e. the plane where the tire circumference is located is perpendicular to the ground. In this way, the vertical inspection of the tire can be carried out.

Preferably, the device is further configured to move the first arm assembly and the second arm assembly along a fifth direction so as to transport the tire to a preset position, after moving the first arm assembly along a second direction and the second arm assembly along a third direction so as to spread the tire.

The fifth direction is preferably the same or a parallel direction as the second or the third direction. Preferably, after the arm assemblies spread the tire, the tire is then transported horizontally to the preset position. In other words, the preset position is preferably a position where the tire hanging horizontally, i.e. the plane where the tire circumference is located is parallel to the ground. In this way, the horizontal inspection of the tire can be carried out.

It is advantageous that the device may further comprise a driving mechanism, including at least one motor and a cable system, for driving the first and/or the second assembly in the first and/or the second and/or the third and/or the fourth and/or the fifth direction. The driving mechanism can be a linear motion system.

Preferably, the device is further configured to flip the tire from an initial position to a final position while moving the first arm assembly and the second arm assembly along the fourth direction.

The initial position is preferably a horizontal position, where the plane where the tire circumference located is parallel to the ground. The final position is preferably a vertical position, where the plane where the tire circumference located is perpendicular to the ground. Moreover, the plane where the tire circumference located is preferably a plane perpendicular to the axis about which the tire rotates, i.e. the rotation axis of the tire, when the tire is in use.

By flipping the tire from the initial position to the final position, the plane where the tire circumference located is preferably rotated approximately 90°.

An advantage of the arm assembly with a spreading angle, especially the second arm assembly with its spreading angle facing upwards, is that, the operations of flipping the tire and moving the arms may take place simultaneously. In other words, the device does not need any additional mechanism to perform the flipping operation. Particularly, the second arm assembly may load the tire from the initial horizontal position, and during the vertical upwards movement of the arm assemblies the tire may hang automatically at the lowest point of the second arm assembly, i.e. at the lowest point or the vertex of the spreading angle of the second arm assembly, due to gravity. Thus the flipping of the tire takes place automatically.

It is especially advantageous to flip the tire to the vertical position and to perform inspection or other operations such as engraving when the tire hanging vertically, since less deformation of the tire will happen in the vertical position.

Preferably, the first arm assembly and the second arm assembly are in a same start position.

The same start position of the first arm assembly and the second arm assembly means preferably, for the vertical inspection scenario, before the arm assemblies start to move and contact the tire, a position where the first arm assembly and the second arm assembly are at the same position when viewing along a vertical axis; or for the horizontal inspection scenario, a position where the arm assemblies are at the same position when viewing along a horizontal axis before the arm assemblies start to move.

It is further preferable, in particular for the vertical inspection scenario, the same start position of the first arm assembly and the second arm assembly is a position where the distance between the vertexes of the spreading angles of the two arm assemblies is smaller than that of the vertexes of the spreading angles of the two arm assemblies when they are holding and spreading the tire for inspection. More preferably, the same start position of the first arm assembly and the second arm assembly is a position where the vertexes of the spreading angles of the two arm assemblies have a minimum distance to each other or overlap with each other. When the tire is spread by the arm assemblies at the preset position, the distance between the vertexes of the spreading angles of the two arm assemblies is preferably the largest.

Another embodiment of the present invention is the provision of a system for processing a tire according to dependent claim 4 wherein the system comprises a device for spreading the tire as described above.

The device for lifting and flipping the tire as described above could optionally also be used as the device for spreading the tire. Alternatively, the device for spreading the tire as described could optionally also be used as the device for lifting and flipping the tire. Furthermore, the system for processing the tire might comprise separate devices for lifting and flipping the tire as well as for spreading the tire respectively. Independently from the configuration of the system for processing the tire, processing comprises at least the steps of lifting, flipping, and spreading the tire.

The transport mechanism is preferably a conveyor system, further preferably a conveyor belt, a roller conveyor or the like.

The transport mechanism is preferably configured to carry the tire to a loading position. The loading position may be so designed that the arm assemblies can move to a region where the rotation axis of the tire is located only with a vertical movement and then load the tire.

It is preferable that the loading position is directly below the two arm assemblies when they are in the start position. When the tire is in the loading position, the arm assemblies first move vertically downwards so as to be positioned at the region where the rotation axis of the tire is located and then perform the spreading operation so as to grip the tire. Afterwards, the arm assemblies hold the tire and move vertically upwards, leaving the loading position and moving horizontally along the fifth direction so as to position the tire at the preset position for the horizontal inspection.

Furthermore, the loading position is preferably a gap in the conveyor belt and located substantially above the two arm assemblies when they are in the start position. The maximum width of the gap is preferably smaller than the diameter of the tire. In this case, the arm assemblies can load and flip the tire simultaneously during the vertical upwards movement. After transporting the tire to the preset position for the vertical inspection, the second arm assembly moves vertically downwards so as both arm assemblies spread the tire.

Preferably, the rotation mechanism comprises at least one, preferably two driving rollers. The at least one driving roller may be cylindrical, however, it comprises substantially a hyperbola shape. A minimum distance between the tire outermost circumference and the line passing through the centers of the two rollers preferably determines the position where the tire should be fixed, i.e. the preset position where the tire inspection would be performed.

Advantageously, at least one roller may be a driving roller, which can rotate the tire when it comes into contact with the driving roller.

Another possibility is to use one or more of the spreading arms or an additional arm to provide the rotation through a rotation drive system to rotate the tire from inside (on the inner diameter).

It is also preferable that the texture or material of the surface of the arms or the driving roller is variable in order to achieve other purposes, for example to increase friction between the arms or the driving roller and the tire.

The form of the driving roller could be a cylinder, a hyperbol or any rotational shape around an axis. This shape can help achieve centering of the tire once the tire gets in contact with the rotation mechanism.

Preferably, the system further comprises an inspection device assembly.

The inspection device assembly may comprise at least one camera for live visual inspection and/or at least one laser scanner and/or at least one x-ray source. Preferably the number of the live cameras is four and the number of the laser scanner are five or other sensor systems such as multispectral cameras.

It is advantageous that the position of the inspection device assembly may be fixed according to the preset position of the tire. Moreover, the inspection devices are preferably placed in all directions to cover the whole inner and outer sections of the tire without to be adjusted for another tire with the same size and optionally for other sizes.

Preferably, the system further comprises a flipping mechanism for flipping the tire.

The flipping mechanism preferably comprises a flipper for helping the arm assemblies to flip or rotate the tire between the horizontal position and the vertical position.

Moreover, a coupler for connecting the flipper to a base is preferably provided to achieve the flipping operation. Alternatively, the gravity used to tilt the conveyor. Preferably, the system further comprises a trimming assembly for tire trimming.

The term "trimming" in the context here refers to the removal of the tire appendages during manufacture process.

The trimming assembly may comprise an outer section trimmer and/or an inner section trimmer. The outer section trimmer is preferably used to perform trimming on the outer section of the side wall of the tire or the tire tread and the inner section trimmer is preferably used to perform trimming on the inner section or the inner liner of the tire.

Preferably, the system further comprises a base. It is advantageous that the base may be designed as a frame structure and may be used to connect or accommodate all the devices or assemblies mentioned above together.

A further solution to the object of the present invention is the provision of a method for processing a tire according to claim 7, wherein the method comprising the following steps:

- moving a first arm assembly or a second arm assembly along a first direction so as to spread the tire, and/or,
- moving the first arm assembly along a second direction and the second arm assembly along a third direction so as to spread the tire, wherein the second direction and the third direction are opposite to each other.

The first direction means preferably a vertical direction, further preferably a vertical and downwards direction with respect to the ground. By moving the first or the second arm assembly along the first direction, a vertical inspection of the tire may be achieved, i.e. the tire may be held in a vertical position where its circumference is perpendicular to the horizontal ground. One advantage of the vertical inspection is that, minimum movements of the arm assemblies are required.

The second or the third direction refers preferably to a horizontal direction, which is parallel with respect to the ground. By moving the first arm assembly along a second direction and the second arm assembly along a third direction, a horizontal inspection of the tire may be achieved, i.e. the tire may be held parallel to the horizontal ground during inspection. An advantage of the horizontal inspection is that the tire does not need to be flipped or rotated during the spreading process.

Preferably, the method further comprises the step of moving the first arm assembly and the second arm assembly along a fourth direction so as to transport the tire to a preset position, prior to the step of moving the first arm assembly or the second arm assembly along the first direction so as to spread the tire.

The preset position is preferably a floating position for inspecting and further handling of the tire, where all side walls of the tire are preferably not in contact with anything at the preset position. The side wall of the tire is understood under this context as two outer circumferential side walls of the tire.

It is preferable that the fourth direction is the opposite direction of the first direction. That is, the fourth direction may be a vertical and upwards direction with respect to the ground. Preferably, before the arm assemblies spread the tire, the tire is first load by the arm assemblies, especially preferably by the second arm assembly, and transported vertically upwards to the preset position. That is, the preset position is preferably a position where the tire hangs vertically, i.e. the plane where the tire circumference is located is perpendicular to the ground. In this way, the vertical inspection of the tire can be carried out.

Preferably, the method further comprises the step of moving the first arm assembly and the second arm assembly along a fifth direction so as to transport the tire to a preset position, after the step of moving the first arm assembly along a second direction and the second arm assembly along a third direction so as to spread the tire. Furthermore, the sensor can be moved towards the tire.

The fifth direction is preferably the same or a parallel direction as the second or the third direction. Preferably, after the arm assemblies spread the tire, the tire is then transported horizontally to the preset position. In other words, the preset position is preferably a position where the tire hanging horizontally, i.e. the plane where the tire circumference is located is parallel to the ground. In this way, the horizontal inspection of the tire can be carried out.

Preferably, the method further comprises the step of flipping the tire from an initial position to a final position while moving the first arm assembly and the second arm assembly along the fourth direction.

The initial position of the tire is preferably a horizontal position, where the plane where the tire circumference located is parallel to the ground. The final position is preferably a vertical position, where the plane where the tire circumference located is perpendicular to the ground. Moreover, the plane where the tire circumference located is preferably a plane perpendicular to the axis about which the tire rotates when in use.

By flipping the tire from the initial position to the final position, the plane where the tire circumference located is preferably rotated approximately 90°.

Preferably, the method further comprises the steps of fixing the tire at the preset position, and rotating the tire for further examining or inspecting. Most preferably, the tire is fixed when the arm assemblies transport the tire until it is in contact with the rotation mechanism.

**Short description of the figures**

The invention is explained with reference to the figures.

Fig. 1a     presents a device for lifting and flipping a tire during delivering of the tire towards the first arm assembly,
Fig. 1b     presents a device for lifting and flipping a tire during lifting and flipping operation,
Fig. 1c     presents a device for lifting and flipping a tire after lifting and flipping operation,
Fig. 1d     presents a system for processing a tire comprising the device for lifting and flipping the tire shown in Fig. 1a to Fig. 1c,
Fig. 2      presents a first arm assembly of the device for lifting and flipping a tire shown in Fig. 1a to Fig. 1c,
Fig. 3      presents a device for spreading a tire,
Fig. 4      presents a system for processing a tire,
Fig. 5      presents a system for processing a tire, especially for a vertical inspection of a tire,
Fig. 6      presents a system for processing a tire when the tire is undergoing a flipping operation,
Fig. 7      presents a system for processing a tire, especially for a horizontal inspection of a tire,
Fig. 8      (a) presents a flow diagram of a method for processing a tire, especially for a horizontal inspection of a tire,
            (b) presents a flow diagram of a method for processing a tire, especially for a vertical inspection of a tire.

Fig. 9      (a) presents a speed profile of the second arm assembly during a complete tire inspection cycle,
            (b) presents a speed profile of the first arm assembly during a complete tire inspection cycle,
            (c1) presents a position profile of the first arm assembly during a complete tire inspection cycle,
            (c2) presents a position profile of the second arm assembly during a complete tire inspection cycle,

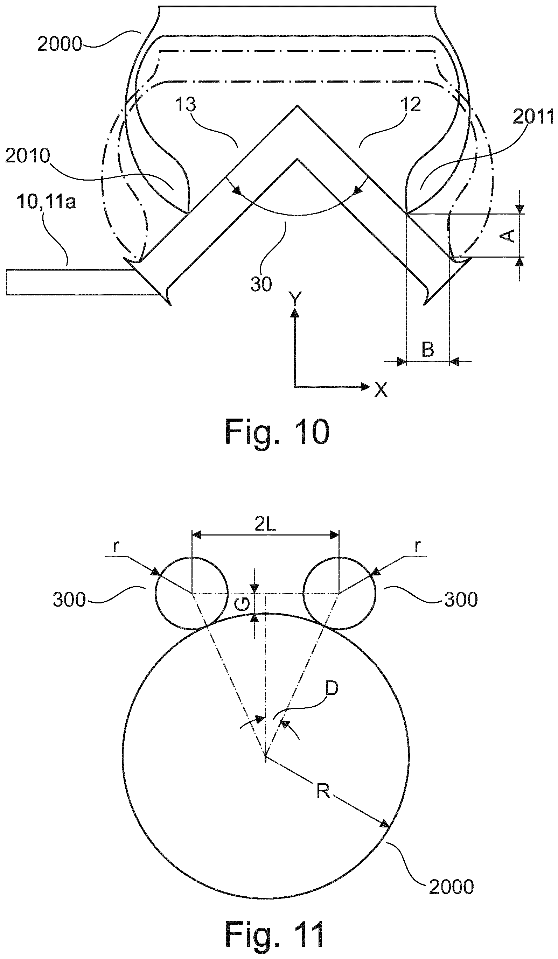

Fig. 10     shows how a spreading width of a tire is determined by an arm with a certain spreading angle, and
Fig. 11     shows how a preset position of a tire is determined.

**Detailed explanation of the figures**

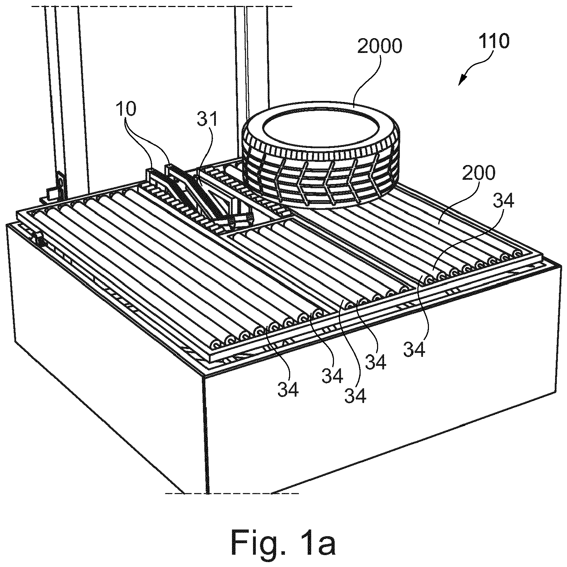

Fig. 1a shows a device 110 for lifting and flipping a tire 2000. According to the example presented in Fig. 1a the device 110 comprises a first arm assembly 10 with two arms 11a, 11b for lifting and flipping the tire 2000. The device 110 further comprises a transport mechanism 200 for delivering the tire 2000 towards the first arm assembly 10. The transport mechanism 200 comprises an opening 31, wherein the first arm assembly 10 is configured to be moved from beneath the transport mechanism 200 upwards through the opening 30 to lift and flip the tire 2000.

Fig. 1a presents the device during the initial stage of delivering of the tire 2000 towards the first arm assembly 10. The tire 2000 is slided over the rollers arranged around the opening 31 of the device 110 until the tire 2000 is positioned above the opening 31. In a next step, the two arms 11a, 11b of the first arm assembly 10 can be moved from beneath the transport mechanism 200 upwards through the opening 31 to lift and flip the tire 2000.

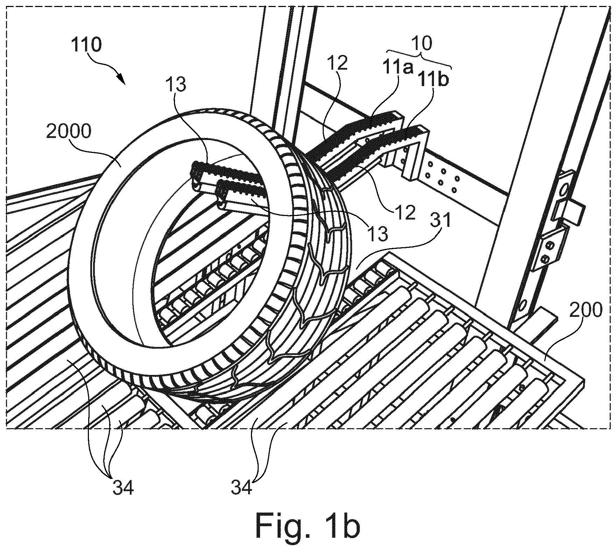

Fig. 1b shows a device 110 for lifting and flipping the tire 2000 during the stage of lifting and flipping. The two arms 11a, 11b of the of the first arm assembly 10 are moved up to lift and flip the tire 2000. To support the flipping of the tire 2000, the transport mechanism 200 tilts around its pivot. Optionally, the transport mechanism 200 can be arranged and configured to tilt around its pivot based on gravity once the tire 2000 is arranged on the transport mechanism 200 and above the opening 31.

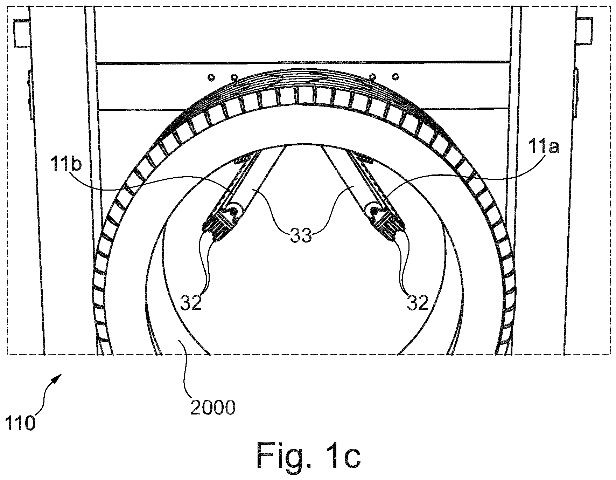

As shown in Fig. 1b, the tire 2000 has been lifted and flipped. Fig. 1c shows a device 110 for lifting and flipping a tire 2000 after lifting and flipping operation. In order to prepare and position the tire 2000 for processing in a next step, the two arms 11a, 11b are rotated around its longitudinal axis by 180 °. As shown in Fig. 1b the two arm sections 12, 13 form a V-shaped arm 11a, 11b during lifting and flipping. After rotating the two arms 11a, 11b around its longitudinal axis by 180 °, the two arm sections 12, 13 form an /\-shaped arm 11a, 11b for supporting the tire 2000 during rotation of the tire 2000. Fig. 1b presents the device 110 during rotation of the two arms 11a, 11b.

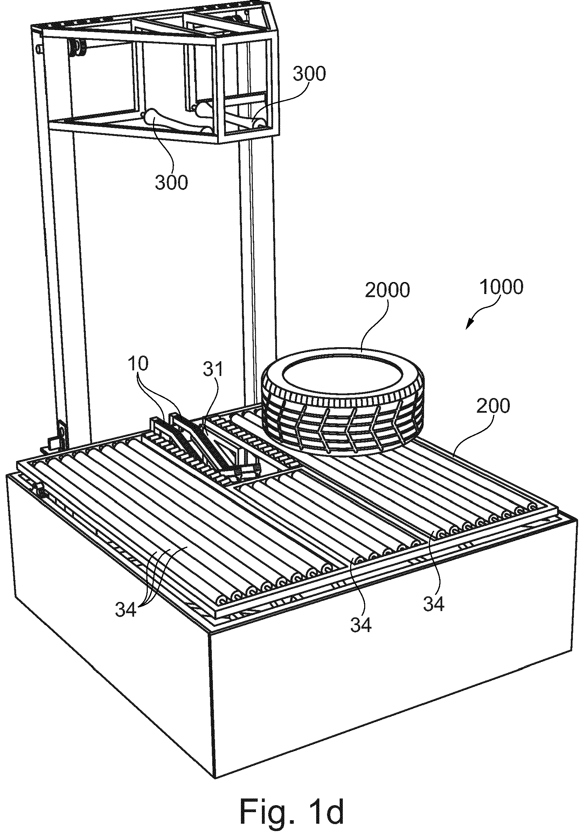

Fig. 1d shows a system 1000 for processing the tire 2000 comprising the device for lifting and flipping the tire 2000 shown in Fig. 1a to Fig. 1c. Furthermore, the system 1000 comprises rotation mechanism 300 for positioning and rotating the tire 2000. The rotation mechanism 300 comprises two hyperbolic shaped driving rollers.

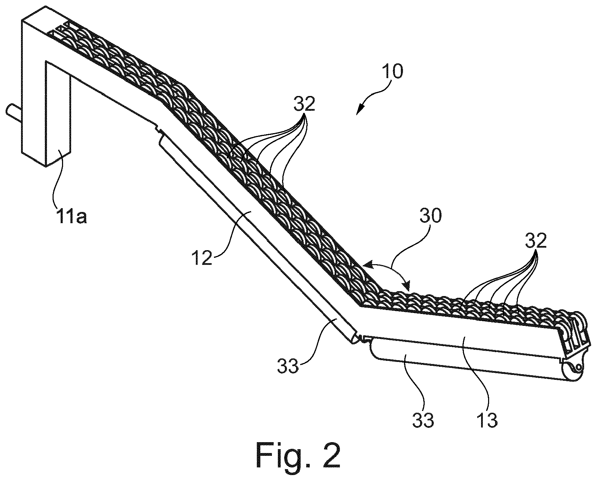

Fig. 2 shows a first arm assembly 10 of the device 110 for lifting and flipping the tire 2000 shown in Fig. 1a to Fig. 1c. In Fig. 2 one arm 11a of the first arm assembly 10 is presented as an example. However, the first arm assembly 10 could comprise more than one arm 11a. The two arm sections 12, 13 are arranged to form an angle 30 with respect to each other. To cause the tire 2000 to slide to a defined position of the arm 11a along its longitudinal direction during lifting and flipping, multiple sliding means 32 are arranged along a longitudinal direction of the arm 11a. Preferably, the defined position is the vertex of the angle 30 formed by the two arm sections 12, 13.

After lifting and flipping the tire 2000, the arm 11a can be rotated by 180 ° (shown in Fig. 1c). After rotation of the arm 11a, the tire 2000 is in contact with the rolling mean 33 of the arm 11a to support the rotation of the tire (2000) during inspection. As shown in the example of Fig. 2, the sliding means 32 and the rolling means 33 are arranged on opposite sides of the at least first arm 11a.

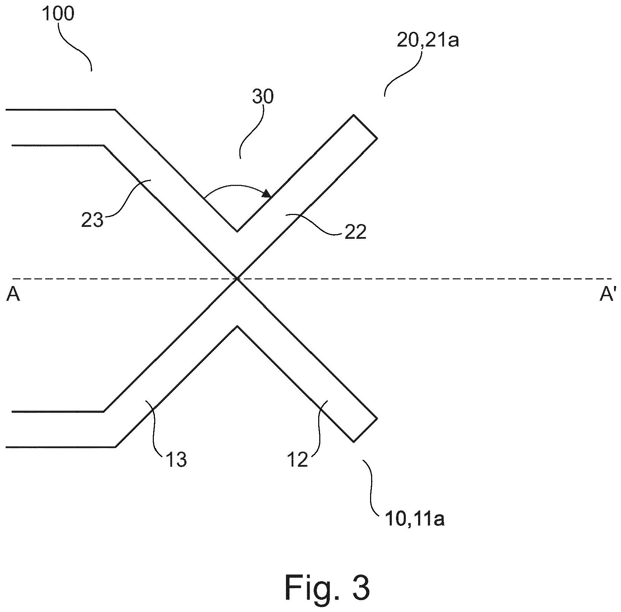

Fig. 3 shows a device 100 for spreading a tire 2000 (not shown in Fig. 3) at a start position. The device 100 comprises a first arm assembly 10 and a second arm assembly 20. Each arm assembly 10, 20 comprises one arm 11a or 21a respectively. It is also advantageous for the arm assemblies 10, 20 to have more than one arm 11b or 21b. In the case of the arm assemblies 10, 20 comprises two arms 11a, 11b and 21a, 21b respectively, the stability of the device 100 for spreading the tire 2000 is increased. The arm 11a and/or 11b of the first arm assembly 10 can be arranged inside or outside of the respective arm 21a and/or 21b of the second arm assembly.

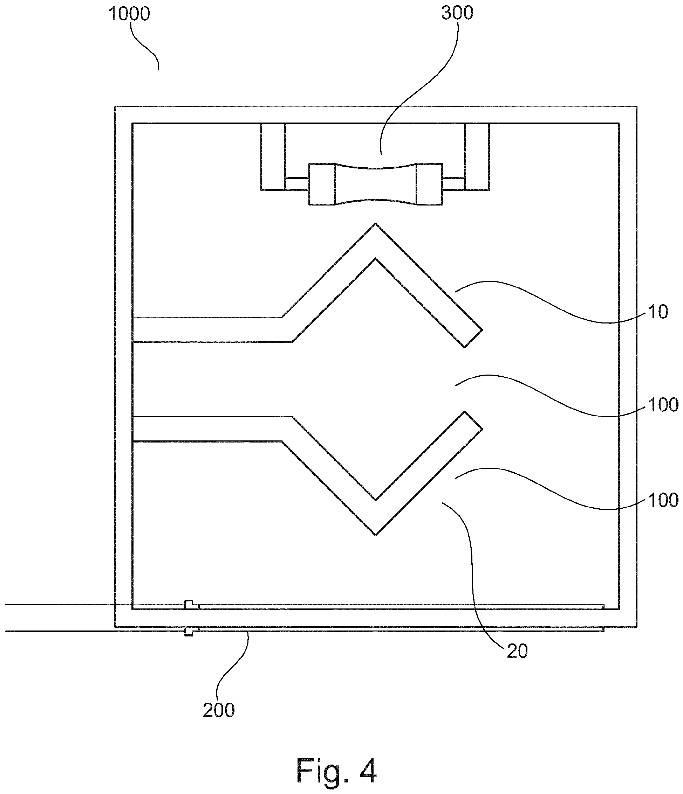

The arm 11a of the first arm assembly 10 may also be an upper arm, which means when the device 100 is at the final preset position where the tire 2000 is spread and ready for inspection, the arm 11a is at a higher position with respect to the arm 21a of the second assembly 20 (see also Fig. 4).

The arm 11a of the first arm assembly 10 comprises two arm sections 12, 13. The arm 21a of the second assembly 20 comprises two arm sections 22, 23. The angle 30 formed between the arm sections 12 and 13, or between the arm sections 22 and 23, is the spreading angle of the device 100, which determines substantially the spreading width the tire beads (see also Fig. 10). The two arm sections 12, 13 (or 22, 23) are arranged symmetrically to each other along the spreading angle bisector, i.e. the length of each of the arm sections are the same. Furthermore, the first and the second arm assembly 10, 20 are arranged symmetrically to each other along a horizontal plane A-A'. After the tire 2000 is spread by the device 100 and ready for inspection, i.e. when the tire 2000 is at the preset position, the rotation axis of the tire 2000 is then located in a plane which is parallel to the horizontal plane A-A'.

Fig. 3 shows one of multiple solutions and should be considered as one possible example only. For example, the arm sections can be arranged to form different shapes, such as for example an V-shaped arm, an Λ-shaped arm or simply a kind of tension bar. Furthermore, the two arm assemblies 10, 20 can comprise different arm shapes.

Fig. 4 shows a system 1000 for processing a tire 2000, which comprises a device 100 for spreading a tire 2000, a transport mechanism 200 for delivering the tire 2000, and a rotation mechanism 300 for positioning and rotating the tire 2000 during the inspection. Here the device 100 is at the final preset position where the tire 2000 (not shown in the figure) is spread and pressed against the rotation mechanism 300. At this final preset position the first arm assembly 10 is at a higher position with respect to the second assembly 20.

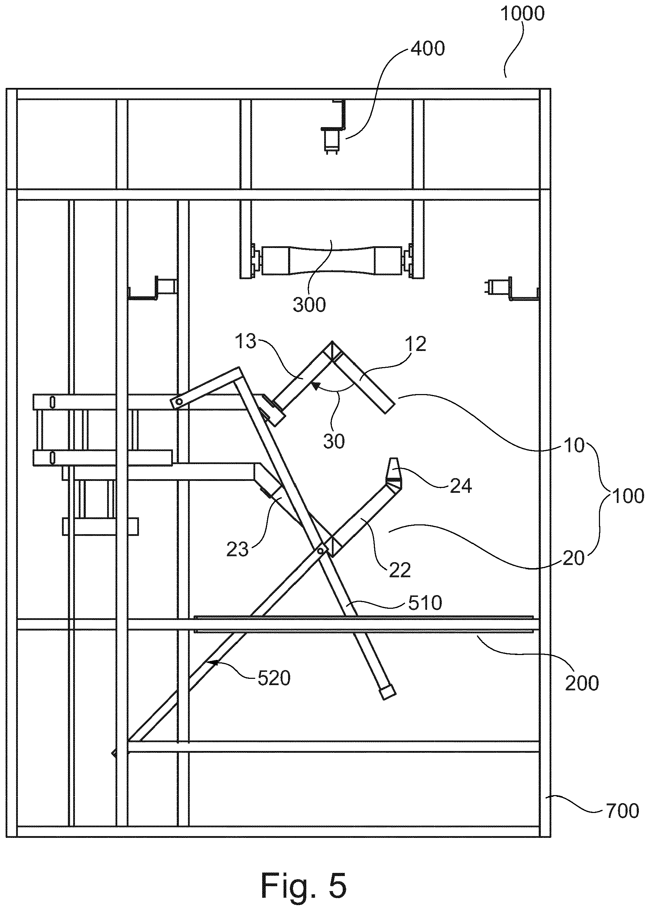

Fig. 5 presents another example of a system 1000 for processing a tire 2000 (not shown in Fig. 5), especially for a vertical inspection of a tire 2000. The system 1000 further comprises an inspection device assembly 400, a flipping mechanism 500 which includes a flipper 510 and a coupler 520, as well as a base 700. The base 700 is essentially a frame structure for connecting and integrating all the parts of the system 1000 together. The flipping mechanism 500 can be considered as some kind of sliding mechanism. The flipper 510 can be considered as some kind of slider.

Here in this case a tip 24 is provided at a free end of the arm section 22 of the second arm assembly 20 to ensure a better grip of the tire 2000 during the loading phase. Furthermore, the inspection device assembly 400 comprises sensors, such as for example three laser scanners. One laser scanner is arranged directly above the rotation mechanism 300 for inspecting the outer surface and the tread of the tire 2000 (not shown), and two laser scanners are arranged on the left and right side of the tire 2000 when it is in the preset position for inspecting the side walls and the inner liner of the tire 2000.

The flipper 510 is essentially an elongated L-shaped arm, one end of which is rotatably connected to a horizontal portion extended from the first arm assembly 10. One end of the coupler 520 is rotatably connected to the flipper 510, and the other end of the coupler 520 is rotatably fixed on the base. The arm assemblies 10, 20 are located below the transport mechanism 200, which is shown as a convey belt here, at the start position and the flipper 510 is arranged horizontally parallel to the transport mechanism. The arm assemblies 10, 20 then move vertically upwards, i.e. along the fourth direction, and the arm assemblies 10, 20 load the tire 2000 (not shown) at its loading position from the convey belt and start to flip the tire. The flipping operation is assisted by the flipper 510, as the tire 2000 can lean against to the flipper 510 during the transition from its horizontal loading position to the vertical position.

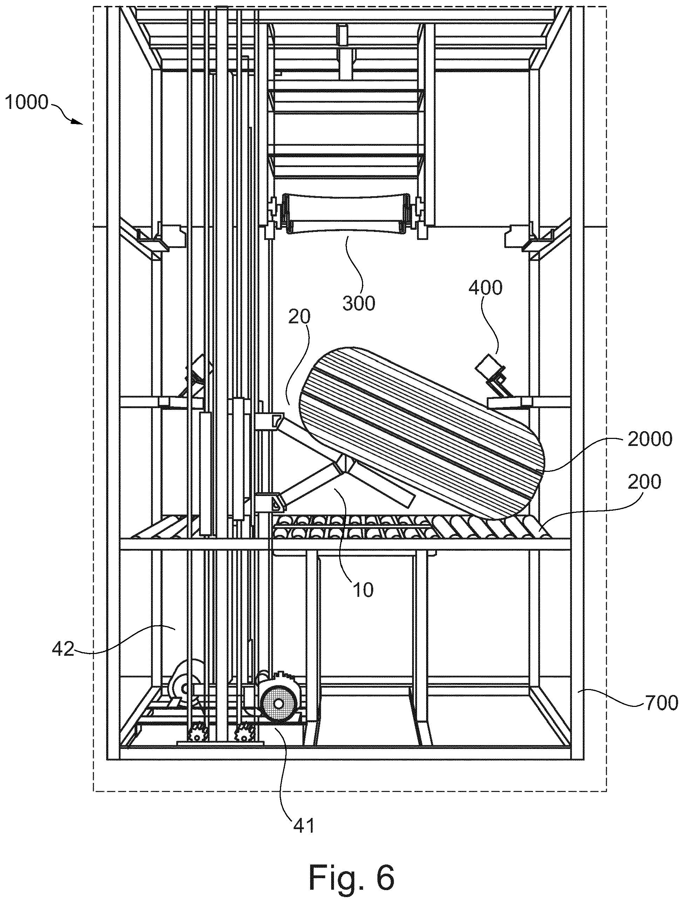

Fig. 6 shows a further example of a system 1000 for vertically inspecting a tire 2000, during the flipping operation, but without the flipping mechanism 500. The tire 2000 is first transported by the convey belt 200 to its loading position. The loading position is essentially a gap in the conveyor belt 200 and located above the two arm assemblies 10, 20 when they are in the start position. The maximum width of the gap is smaller than the diameter of the tire 2000.

In this case, the arm assemblies 10, 20 load and flip the tire 2000 simultaneously during the vertical upwards movement, i.e. during the movement along the fourth direction. After transporting the tire 2000 to the preset position for the vertical inspection, the second arm assembly 20 moves vertically downwards, i.e. along the first direction, so as to spread the tire. The vertical movements of the arm assemblies 10, 20 are realized by the driving mechanism 40 which comprises at least one motor 41 and a cable system 42. The final preset position of the tire 2000 and the device 100 is also shown in Fig. 4.

The example shown in Fig. 6 'demonstrates a constellation wherein the arms are perpendicular to the conveyor rollers. Nevertheless, as shown before, the arms can also be arranged parallel to the conveyor rollers.

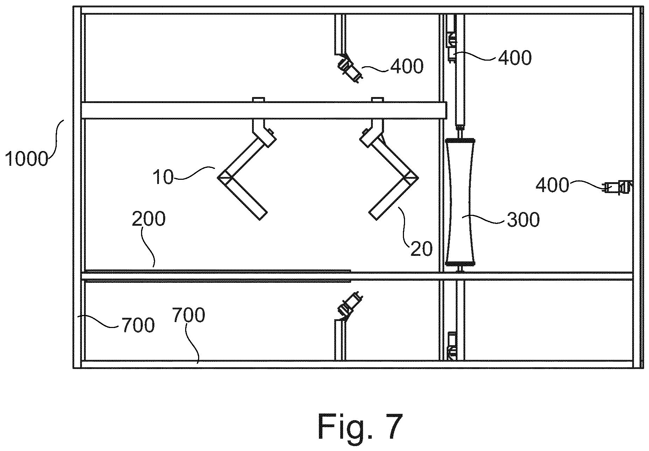

Fig. 7 presents an example of a system 1000 for processing a tire, especially for a horizontal inspection of a tire 2000 (not shown in Fig. 7). The loading position is directly below the two arm assemblies 10, 20 when they are in the start position.

When the tire 2000 is transported by the convey belt 200 to the loading position, the arm assemblies 10, 20 move vertically downwards so as to be positioned at a region where the rotation axis of the tire 2000 is located and then perform the spreading operation, i.e. the arm assemblies 10, 20 move opposite to each other in the second and the third direction so as to grip the tire. Afterwards, the arm assemblies 10, 20 hold the tire 2000 and move vertically upwards, leaving the loading position and moving horizontally along the fifth direction so as to position the tire 2000 at the preset position for the horizontal inspection.

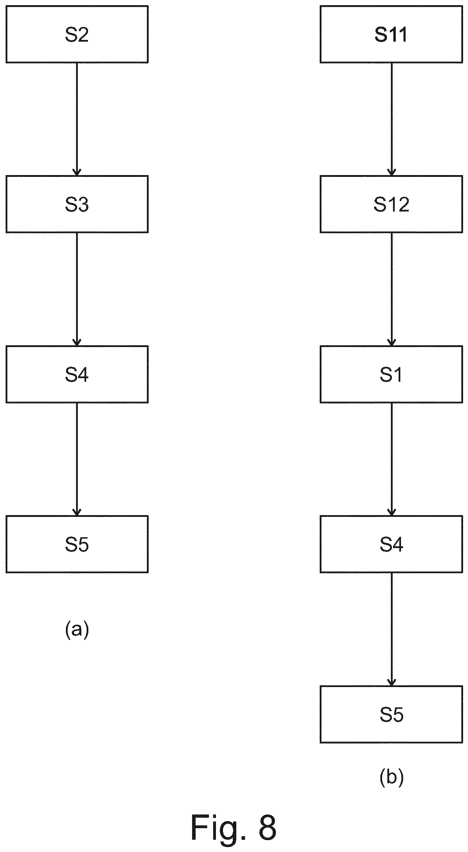

Fig. 8 shows steps of a method for processing a tire 2000, which comprises the following two main steps:

(S1) moving a first arm assembly 10 or a second arm assembly 20 along a first direction so as to spread the tire 2000, and/or

(S2) moving the first arm assembly 10 along a second direction and the second arm assembly 20 along a third direction so as to spread the tire 2000, wherein the second direction and the third direction are opposite to each other.

Furthermore, a flow diagram for a complete loading and inspection cycle of the method for processing a tire, especially for a horizontal inspection of a tire 2000 is shown in Fig. 8(a). The steps of S2 to S3, i.e. moving the first arm assembly and the second arm assembly along a fifth direction so as to transport the tire 2000 to a preset position, form the loading cycle of the tire. Moreover, the steps of S4, i.e. fixing the tire 2000 at the preset position, to S5, i.e. rotating the tire 2000 for further examining or inspecting, form the inspection cycle of the tire 2000.

Additionally, there could be two further steps of S3' to S2' subsequently following the step S5. In the steps S3' and S2', the arm assemblies 10, 20 travel along the same paths as they travel in the steps of S2 and S3, but in reversed moving directions. Therefore, the steps S3' to S2' form the unloading cycle of the tire. After the final step S2' the tire 2000 is placed by the arm assemblies 10, 20 back to the original loading position on the convey belt 200, and the tire 2000 will then be transported by the convey belt 200 to leave the inspection system 1000.

Fig. 8(b) is a flow diagram for a complete loading and inspection cycle of the method for processing a tire 2000, especially for a vertical inspection of a tire. Prior to the step S1, the step S11, i.e. moving the first arm assembly 10 and the second arm assembly 20 along a fourth direction so as to transport the tire 2000 to a preset position, is performed. After or simultaneously with the step S11, the step S12, i.e. flipping the tire 2000 from an initial position to a final position while moving the first arm assembly and the second arm assembly along the fourth direction, takes place. In this way, the steps S11, S12 and S1 form the loading cycle of the tire.

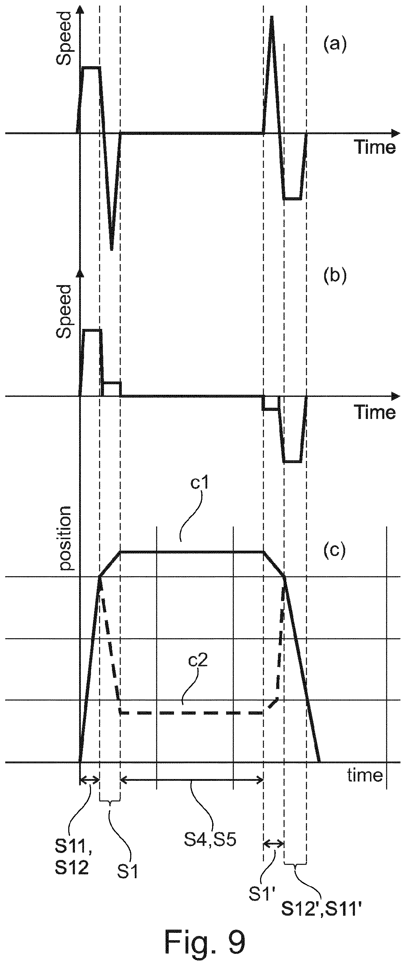

After the vertical tire 2000 inspection, namely after the steps S4 and S5, three further steps S1', S12' and S11' take place, where the arm assemblies 10, 20 move along the same path as in the steps S11, S12 and S1, but in reversed directions (see also Fig. 9(c)). Hence, the unloading cycle of the tire 2000 comprises the steps S1', S12' and S11'. The whole loading-inspection-unloading cycle will continue as long as the tires handled are the same and all the other parameters that contribute to the motion profile of the arm assemblies 10, 20 are the same. If the arms are not moved horizontally, different tire sizes can be processed without the need of adjusting the cycle. Optionally, the arms can be moved horizontally.

Fig. 9 further shows in detail the change in speed and position of the arm assemblies 10, 20 for the loading-inspection-unloading cycle S11, S12 -> S1 -> S4 -> S5 -> S1' -> S12', S11' as described above in Fig. 8(b).

Fig. 9(a) is the speed profile of the second arm assembly 20 during the whole cycle, whereas Fig. 9(b) is the speed profile of the first arm assembly 10 during the whole cycle. In Fig. 9(c), the solid curve c1 represents the position profile of the first arm assembly 10 during the whole cycle, and the dashed curve c2 represents the position profile of the second arm assembly 20 during the whole cycle.

As shown in Fig. 9(c), at the start of the cycle both arm assemblies 10, 20 start from the same start position and move vertically upwards, i.e. along the fourth direction (step 11), to a certain height, which is usually higher than the outer diameter of the handled tire 2000 when the tire 2000 hangs vertically. The same start position of the first arm assembly 10 and the second arm assembly 20 is a position where the vertexes of the spreading angles 30 of the two arm assemblies have a minimum distance to each other or overlap with each other (see also Fig. 3).

During the vertical upward movement of the arm assemblies 10, 20, the flipping of the tire 2000 (step S12) will also be achieved. Directly following the steps S11 and S12, the second arm assembly 20 will reverse its moving direction, i.e. move along the first direction (step S1), to start the spreading process. When the tire 2000 is held and spread by the arm assemblies, the distance between the vertexes of the spreading angles of the two arm assemblies is the largest, which can also be clearly seen from Fig. 9(c), where at the end of the S1 phase and during the S5, S6 phases the distance between the two arm assemblies 10, 20 is the largest.

After the tire 2000 is fixed to the preset position and undergoes the vertical inspection (steps S4, S5), the arm assemblies 10, 20 will move along the same path but in reversed direction to complete the unloading cycle (steps S1', S12' and S11'). This loading-inspection-unloading cycle will continue as long as the tires handled by the system 1000 are of the same size and all the other parameters that contribute to the motion profile of the arm assemblies 10, 20 are the same.

Fig. 10 shows how a spreading width "B" of a tire 2000 is determined by an arm with a certain spreading angle. Here shows only the spreading state of the arm 11a of the first arm assembly 10 with respect to the upper part of the tire 2000. The spreading state of the second arm assembly 20 with respect to the lower part of the tire 2000 are essentially the same as that of the first arm assembly 10, since they are symmetrically arranged.

The tire 2000 is assumed to be a collection of three rigid bodies here with one substantially squared top part and two curved side parts, wherein the only movable parts are the two side parts with respect to the top part. The tire 2000 with a solid line is the tire 2000 at the non-spread state and that with a dashed line is the tire 2000 at the final spread state. The distance "A" represents the vertical height change of the arm 11a before and after spreading, which can be measured by sensors integrated to the system 1000. A laser sensor will measure the distance to the object. The change in distance before and after spreading represents the height change. The spreading width "B" is the horizontal distance difference between the two tire beads 2010, 2011 in the non-spread state and in the spread state.

At the beginning of the spreading process, the two arm sections 12, 13 of the arm 11a first come into contact with the two tire beads 2010, 2011 substantially in the middle region of each of the arm sections 12, 13. The spreading angle 30 is located substantially in between the two tire beads 2010, 2011, with its vertex pointing to the inner liner of the top part of the tire 2000.

During the spreading process, due to the opposite vertical movements of the first arm assembly 10 and the second arm 20 and due to the geometry relation between the two arm sections 12, 13 and the tire beads 2010, 2011, the tire beads 2010, 2011 will move opposite with respect to each other along the X-direction, i.e. the horizontal distance between the two beads 2010, 2011 will become larger.

After the tire 2000 is spread, the spreading width "B" can be calculated by the formula below:

$$B = A / \tan(\text{Spreading Angle}/2 - 90°) \qquad (1)$$

It can be referred to the formula (1) above, the larger the spreading angle 30 and the vertical height change "A" of the arm during the spreading process are, the wider the tire beads 2010, 2011 can be spread, that is, the larger the spreading width "B" will be.

By calculating the spreading width "B", it is helpful for the device 100 and the inspection system 1000 to quantify the spreading process so that an accurate spreading result can be achieved when the vertical height change "A" of the arm and the spreading angle 30 are known. Furthermore, such quantified spreading processes can be stored in association with different types of tires in the system, which will ensure better automated loading and inspection processes once the parameters of a tire 2000 to be handled in the further are input to the system. Alternatively, different approximation models can be used without measuring "A".

Fig. 11 shows how a preset position of a tire 2000 is determined. The preset position is determined by finding a minimum distance "G" between the outermost circumference of the tire 2000 and a line (the length of which is shown as 2L in Fig. 11) passing through the centers of two main rollers 300, when the arm assemblies hold the tire 2000 and the outermost circumference of the tire 2000 comes into contact with the main rollers 300.

The minimum distance "G" satisfies the following mathematical relations:

$$G = (R+r)\text{Cos}(D) - R \qquad (2)$$

$$(R+r)^2 = L^2 + (G+r)^2 \qquad (3),$$

where R is the radius of the tire 2000, r is the radius of the main rollers, D is the half angle between the connecting lines of the tire center and the two rollers' centers.

When "G" is calculated by using the formulas (2) or (3), the preset position and the maximum height of a given tire 2000 can reach can be determined, which is useful for positioning and adjusting the inspection device assembly.

**List of reference signs**

| | |
|---|---|
| 100 | Device for spreading a tire |
| 10 | First arm assembly |
| 20 | Second arm assembly |
| 11a, 11b | Arm of the first arm assembly |
| 21a, 21b | Arm of the second arm assembly |
| 12, 13 | Arm section of the first arm assembly |
| 22, 23 | Arm section of the second arm assembly |
| 30 | Angle |
| 31 | Opening |
| 32 | Sliding means |
| 33 | Rolling means |
| 34 | Rollers |
| 40 | Driving mechanism |
| 41 | Motor |
| 42 | Cable system |
| | |
| 200 | Transport mechanism |
| 300 | Rotation mechanism |
| 400 | Inspection device assembly |
| 500 | Flipping mechanism |
| 510 | Flipper |
| 520 | Coupler |
| 600 | Trimming assembly |
| 610 | Outer section trimmer |
| 620 | Inner section trimmer |
| 700 | Base |
| | |
| 1000 | System for processing a tire |
| | |
| 2000 | Tire |
| 2010, 2011 | Tire beads |

**Claims**

1. A device (100) for spreading a tire (2000),

   wherein the device (100) comprises a first arm assembly (10) and a second arm assembly (20),
   the first arm assembly (10) and the second arm assembly (20) comprise at least one arm (11a), (21a) respectively,
   and each arm (11a), (21a) comprises at least two arm sections (12), (13); (22), (23), wherein the at least two arm sections (12), (13); (22), (23) of each arm (11a), (21a) form an angle (30) with respect to each other,
   wherein the device (100) is configured to:

   move the first arm assembly (10) or the second arm assembly (20) along a first direction so as to spread the tire (2000),
   and/or
   move the first arm assembly (10) along a second direction and the second arm assembly (20) along a third direction so as to spread the tire, wherein the second direction and the third direction are opposite to each other,
   wherein the at least two arm sections (12), (13); (22), (23) contact two tire beads and the angle (30) is located substantially between the tire beads, and wherein the angle (30) determines substantially a width or a distance of the tire beads can be spread.

2. A device (100) according to claim 1, wherein the device (100) is further configured to:

move the first arm assembly (10) and the second arm assembly (20) along a fourth direction so as to transport the tire to a preset position, before moving the first arm assembly (10) or the second arm assembly (20) along the first direction so as to spread the tire (2000); and/or

to move the first arm assembly (10) and the second arm assembly (20) along a fifth direction so as to transport the tire (2000) to a preset position, after moving the first arm assembly (10) along a second direction and the second arm assembly (20) along a third direction so as to spread the tire.

**3.** A device (100) according to any one of claims 1 or 2, wherein the device (100) is further configured to:
flip the tire (2000) from an initial position to a final position while moving the first arm assembly (10) and the second arm assembly (20) along the fourth direction.

**4.** A system (1000) for processing a tire (2000),
wherein the system (1000) comprises:

a device (100) for spreading the tire (2000) according to any one of claims 1 to 3, and
a rotation mechanism (300) for positioning and rotating the tire (2000).

**5.** A system (1000) according to claim 4, further comprising an inspection device assembly (400).

**6.** A system (1000) according to any one of claims 4 to 5, further comprising a trimming assembly (600) for tire trimming.

**7.** A method for processing a tire (2000), wherein the method utilizing a system (1000) for processing the tire (2000) according to any one of claims 4 to 6, comprising the steps:

(S1) moving a first arm assembly (10) or a second arm assembly (20) along a first direction so as to spread the tire, and/or
(S2) moving the first arm assembly (10) along a second direction and the second arm assembly (20) along a third direction so as to spread the tire (2000), wherein the second direction and the third direction are opposite to each other.

**8.** A method according to claim 7, comprising the step:
(S11) moving the first arm assembly (10) and the second arm assembly (20) along a fourth direction so as to transport the tire (2000) to a preset position, prior to the step of (S1) moving the first arm assembly (10) or the second arm assembly (20) along the first direction so as to spread the tire (2000).

**9.** A method according to claim 7 or 8, comprising the step:
(S3) moving the first arm assembly (10) and the second arm assembly (20) along a fifth direction so as to transport the tire (2000) to a preset position, after the step of (S2) moving the first arm assembly (10) along a second direction and the second arm assembly (20) along a third direction so as to spread the tire (2000).

**Patentansprüche**

**1.** Eine Vorrichtung (100) zum Spreizen eines Reifens (2000),

wobei die Vorrichtung (100) eine erste Armanordnung (10) und eine zweite Armanordnung (20) umfasst,
die erste Armanordnung (10) und die zweite Armanordnung (20) jeweils mindestens einen Arm (11a), (21a) umfassen, und jeder Arm (11a), (21a) mindestens zwei Armabschnitte (12), (13); (22), (23) umfasst, wobei die mindestens zwei Armabschnitte (12), (13); (22), (23) jedes Arms (11a), (21a) einen Winkel (30) zueinander bilden,
wobei die Vorrichtung (100) so konfiguriert ist, dass sie:

die erste Armanordnung (10) oder die zweite Armanordnung (20) entlang einer ersten Richtung bewegt, um den Reifen (2000) zu spreizen,
und/oder
die erste Armanordnung (10) entlang einer zweiten Richtung und die zweite Armanordnung (20) entlang einer dritten Richtung bewegt, um den Reifen zu spreizen, wobei die zweite Richtung und die dritte Richtung einander entgegengesetzt sind,

wobei die mindestens zwei Armabschnitte (12), (13); (22), (23) zwei Reifenwülste berühren und sich der Winkel (30) im Wesentlichen zwischen den Reifenwülsten befindet, und wobei der Winkel (30) im Wesentlichen eine Breite oder einen Abstand der Reifenwülste bestimmt, die gespreizt werden können.

2. Vorrichtung (100) gemäß Anspruch 1, wobei die Vorrichtung (100) ferner so konfiguriert ist, dass sie:

die erste Armanordnung (10) und die zweite Armanordnung (20) entlang einer vierten Richtung bewegt, um den Reifen in eine voreingestellte Position zu transportieren, bevor sie die erste Armanordnung (10) oder die zweite Armanordnung (20) entlang der ersten Richtung bewegt, um den Reifen (2000) zu spreizen; und/oder die erste Armanordnung (10) und die zweite Armanordnung (20) entlang einer fünften Richtung bewegt, um den Reifen (2000) in eine voreingestellte Position zu transportieren, nachdem sie die erste Armanordnung (10) entlang einer zweiten Richtung und die zweite Armanordnung (20) entlang einer dritten Richtung bewegt hat, um den Reifen zu spreizen.

3. Vorrichtung (100) gemäß einem der Ansprüche 1 oder 2, wobei die Vorrichtung (100) ferner so konfiguriert ist, dass sie:
den Reifen (2000) von einer Ausgangsposition in eine Endposition wendet, während sie die erste Armanordnung (10) und die zweite Armanordnung (20) entlang der vierten Richtung bewegt.

4. System (1000) zum Bearbeiten eines Reifens (2000),
wobei das System (1000) Folgendes umfasst:

eine Vorrichtung (100) zum Spreizen des Reifens (2000) gemäß einem der Ansprüche 1 bis 3, und einen Drehmechanismus (300) zum Positionieren und Drehen des Reifens (2000).

5. System (1000) gemäß Anspruch 4, ferner umfassend eine Inspektionsvorrichtungsanordnung (400).

6. System (1000) gemäß einem der Ansprüche 4 bis 5, ferner umfassend eine Trimmanordnung (600) zum Trimmen von Reifen.

7. Verfahren zum Bearbeiten eines Reifens (2000), wobei das Verfahren ein System (1000) zum Bearbeiten des Reifens (2000) gemäß einem der Ansprüche 4 bis 6 verwendet, umfassend die folgenden Schritte:

(S1) Bewegen einer ersten Armanordnung (10) oder einer zweiten Armanordnung (20) entlang einer ersten Richtung, um den Reifen zu spreizen, und/oder
(S2) Bewegen der ersten Armanordnung (10) entlang einer zweiten Richtung und der zweiten Armanordnung (20) entlang einer dritten Richtung, um den Reifen (2000) zu spreizen, wobei die zweite Richtung und die dritte Richtung einander entgegengesetzt sind.

8. Verfahren gemäß Anspruch 7, umfassend den Schritt:
(S11) Bewegen der ersten Armanordnung (10) und der zweiten Armanordnung (20) entlang einer vierten Richtung, um den Reifen (2000) in eine voreingestellte Position zu transportieren, vor dem Schritt des (S1) Bewegens der ersten Armanordnung (10) oder der zweiten Armanordnung (20) entlang der ersten Richtung, um den Reifen (2000) zu spreizen.

9. Verfahren gemäß Anspruch 7 oder 8, umfassend den Schritt:
(S3) Bewegen der ersten Armanordnung (10) und der zweiten Armanordnung (20) entlang einer fünften Richtung, um den Reifen (2000) in eine voreingestellte Position zu transportieren, nach dem Schritt (S2) des Bewegens der ersten Armanordnung (10) entlang einer zweiten Richtung und der zweiten Armanordnung (20) entlang einer dritten Richtung, um den Reifen (2000) zu spreizen.

**Revendications**

1. Dispositif (100) d'écartement de pneu (2000),

dans lequel le dispositif (100) comprend un premier ensemble de bras (10) et un second ensemble de bras (20), le premier ensemble de bras (10) et le second ensemble de bras (20) comprennent au moins un bras (11a), (21a) respectivement, et chaque bras (11a), (21a) comprend au moins deux sections de bras (12), (13) ; (22), (23), dans lesquelles les au moins deux sections de bras (12), (13) ; (22), (23) de chaque bras (11a), (21a) forment un angle (30) l'une par rapport à l'autre,
dans lequel le dispositif (100) est configuré pour :

déplacer le premier ensemble de bras (10) ou le deuxième ensemble de bras (20) le long d'une première direction de manière à écarter le pneu (2000),
et/ou
déplacer le premier ensemble de bras (10) le long d'une deuxième direction et le deuxième ensemble de bras (20) le long d'une troisième direction afin d'écarter le pneu, la deuxième direction et la troisième direction étant opposées l'une à l'autre,
dans lequel les au moins deux sections de bras (12), (13) ; (22), (23) entrent en contact avec deux billes de pneu et l'angle (30) est situé sensiblement entre les billes de pneu, et
dans lequel l'angle (30) détermine sensiblement une largeur ou une distance à laquelle les billes de pneu peuvent être écartées.

2. Dispositif (100) selon la revendication 1, dans lequel le dispositif (100) est en outre configuré pour :

déplacer le premier ensemble de bras (10) et le deuxième ensemble de bras (20) le long d'une quatrième direction de manière à transporter le pneu jusqu'à une position prédéfinie, avant de déplacer le premier ensemble de bras (10) ou le deuxième ensemble de bras (20) le long de la première direction de manière à écarter le pneu (2000) ; et/ou
déplacer le premier ensemble de bras (10) et le deuxième ensemble de bras (20) le long d'une cinquième direction afin de transporter le pneu (2000) jusqu'à une position prédéfinie, après avoir déplacé le premier ensemble de bras (10) le long d'une deuxième direction et le deuxième ensemble de bras (20) le long d'une troisième direction afin d'écarter le pneu.

3. Dispositif (100) selon l'une des revendications 1 ou 2, dans lequel le dispositif (100) est en outre configuré pour :
retourner le pneu (2000) d'une position initiale à une position finale tout en déplaçant le premier ensemble de bras (10) et le deuxième ensemble de bras (20) le long de la quatrième direction.

4. Système (1000) de traitement d'un pneu (2000),
dans lequel le système (1000) comprend :

un dispositif (100) pour écarter le pneu (2000) selon l'une des revendications 1 à 3, et
un mécanisme de rotation (300) pour positionner et faire tourner le pneu (2000).

5. Système (1000) selon la revendication 4, comprenant en outre un ensemble de dispositifs d'inspection (400).

6. Système (1000) selon l'une quelconque des revendications 4 à 5, comprenant en outre un ensemble de rognage (600) pour le rognage des pneus.

7. Procédé de traitement d'un pneu (2000), dans lequel le procédé utilise un système (1000) pour traiter le pneu (2000) selon l'une quelconque des revendications 4 à 6, comprenant les étapes suivantes :

(S1) déplacer un premier ensemble de bras (10) ou un deuxième ensemble de bras (20) le long d'une première direction de manière à écarter le pneu,
et/ou
(S2) déplacer le premier ensemble de bras (10) le long d'une deuxième direction et le deuxième ensemble de bras (20) le long d'une troisième direction afin d'écarter le pneu (2000), la deuxième direction et la troisième direction étant opposées l'une à l'autre.

8. Procédé selon la revendication 7, comprenant l'étape :
(S11) déplacer le premier ensemble de bras (10) et le deuxième ensemble de bras (20) le long d'une quatrième direction de manière à transporter le pneu (2000) vers une position prédéfinie, avant l'étape de (S1) déplacer le premier ensemble de bras (10) ou le deuxième ensemble de bras (20) le long de la première direction de manière à écarter le pneu (2000).

**9.** Procédé selon la revendication 7 ou 8, comprenant l'étape :
(S3) déplacer le premier ensemble de bras (10) et le deuxième ensemble de bras (20) le long d'une cinquième direction de manière à transporter le pneu (2000) vers une position prédéfinie, après l'étape de (S2) déplacer le premier ensemble de bras (10) le long d'une deuxième direction et le deuxième ensemble de bras (20) le long d'une troisième direction de manière à écarter le pneu (2000).

Fig. 1a

Fig. 1b

Fig. 1c

Fig. 1d

**Fig. 2**

100

20,21a

30

23

22

A ———————————————————————————————————————————— A'

13

12

10,11a

# Fig. 3

Fig. 4

Fig. 5

Fig. 6

Fig. 7

(a)

(b)

Fig. 8

Fig. 9

## Fig. 10

## Fig. 11

**EP 4 134 227 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5013010 A
- US 3583674 A
- US 4293120 A
- US 4890717 A
- US 4793463 A
- US 1886834 A
- US 2018370304 A
- CN 110816178 A